# EUROPEAN PATENT SPECIFICATION

(11) **EP 2 062 416 B1**
(45) Date of publication and mention of the grant of the patent: **17.03.2010**
(21) Application number: 07823124.8
(22) Date of filing: 13.09.2007
(51) Int. Cl.: H04L 29/06

(54) **RESOLVING A NETWORK ADDRESS OF A TERMINAL**
AUFLÖSUNG EINER NETZWERKADRESSE EINES ENDGERÄTS
CORRECTION D'ADRESSE RÉSEAU D'UN TERMINAL

(30) Priority: 14.09.2006 FI 20060821
(43) Date of publication of application: 27.05.2009
(73) Proprietor: Teliasonera AB, 106 63 Stockholm (SE)
(72) Inventor: JALKANEN, Tero, 04340 Tuusula (FI); WECKMAN, Jari, 37560 Lempäälä (FI)
(74) Representative: Pursiainen, Timo Pekka
(86) International application number: PCT/FI2007/050487
(87) International publication number: WO 2008/031927

(56) References cited:
- WO-A-2004/061543
- US-A1- 2002 027 915
- LIND AT&T S: "ENUM Call Flows for VoIP Interworking ; draft-lind-enum-callflows-03.txt" IETF STANDARD-WORKING-DRAFT, INTERNET ENGINEERING TASK FORCE, IETF, CH, no. 3, February 2002 (2002-02), XP015004214 ISSN: 0000-0004
- FALTSTROM CISCO SYSTEMS P ET AL: "The E.164 to Uniform Resource Identifiers (URI) Dynamic Delegation Discovery System (DDDS) Application (ENUM); rfc3761.txt;" IETF STANDARD, INTERNET ENGINEERING TASK FORCE, IETF, CH, April 2004 (2004-04), XP015009541 ISSN: 0000-0003

## Description

### Field of the invention

The present invention relates to IP based networks, and more particularly to an arrangement for resolving a network address of a terminal.

### Background of the invention

The IP Multimedia Subsystem (IMS) is a standardised networking architecture for 3^{rd} (3GPP) and further generation mobile networks, which provide the users with mobile and fixed multimedia services. The IMS runs over the standard Internet Protocol (IP), using a Voice-over-IP (VoIP) implementation based on a 3GPP standardised implementation of Session Initiation Protocol (SIP). SIP, in turn, is a protocol developed for initiating, modifying, and terminating an interactive user session that involves multimedia elements such as video, voice, instant messaging, online games, and virtual reality.

The basic idea of the IMS architecture is to enable a user to connect to an IMS network, regardless of what access network (supporting standard Internet Protocol (IP)) they are using. Accordingly, an IMS network can practically be accessed via any network (fixed, mobile or wireless) with packet-switching functions, such as GPRS, UMTS, CDMA2000, WLAN, WiMAX, DSL, cable, etc. Also circuit-switched telephone systems, like PSTN and GSM are supported through gateways. Direct IMS terminals (such as mobile phones, PDAs, computers) can register directly into an IMS network, even when roaming; the only requirement is that they support SIP User Agents.

One important aspect of the IMS is the enhanced user mobility; the IMS allows operators and service providers to use different underlying network architectures, whereby the mobile network provides terminal mobility (roaming), but user mobility is provided by IMS and SIP. In a conventional 3GPP network, the user and his/her mobile terminal are identified with the following identities: International Mobile Subscriber Identity (IMSI), a unique user identity stored in the (U)SIM; Temporal Mobile Subscriber Identity (TMSI), a unique user identity generated per geographical location; International Mobile Equipment Identity (IMEI), a unique device identity; and Mobile Subscriber ISDN Number (MSISDN), i.e. the actual telephone number of the user. Now, the IMS architecture includes some additional identities: IP Multimedia Private Identity (IMPI), and IP Multimedia Public Identity (IMPU). Instead of phone numbers, these identities are URIs (Uniform Resource Identifier), which can be digits (a so-called tel-uri, like tel:+358-40-1234567) or alphanumeric identifiers (a so-called sip-uri, like sip:pekka.peloton@sonera.com). The IMPI is unique to the terminal device, and a user can have multiple IMPUs per IMPI (often a tel-uri and a sip-uri). The IMPU can also be shared with another terminal device, whereby both can be reached with the same identity (e.g. a single phone number for a whole family).

The user database of the IMS (Home Subscriber Server, HSS) contains at least the IMPU, IMPI, IMSI, and MSISDN. Thus, a mobile user can be paged according to his/her MSISDN as traditionally, but also according to his/her IMPU, e.g. a SIP address. This poses new challenges for resolving the current location of the user and the routing address, whereto the paging request should be sent.

One reason for these challenges is the fact that there is no common database wherefrom the SIP addresses could be resolved; a single operator may have several SIP address domains, which may be gathered in several non-connected databases and which are not necessarily known by the other operators. Furthermore, different kind of operators may access to the IMS architecture in different ways: operator A may be connected only via a private GPX/IPX (Internetwork Packet Exchange), operator B only via Internet, and operator C only via a PSTN, for example. Each of these networks is characterised by their own protocols and database structures all requiring a specific approach.

A further reason for said challenges is the lack of a global ENUM DNS database (Telephone Number Mapping (also referred as Electronic Numbering and E.164 Number Mapping) Domain Name System); there exists operator-specific ENUM databases, which translate the MSISDN numbers to SIP addresses using DNS, but not all operators are supporting ENUM DNS translation.
Document US2002/0027915 discloses an address resolution mechanism.

### Summary of the invention

Now there is invented an improved method and technical equipment implementing the method, by which the problems of resolving the routing address and the location of the user are significantly alleviated. Various aspects of the invention include a method, an electronic device and a computer program, which are characterized by what is stated in the independent claims. Various embodiments of the invention are disclosed in the dependent claims.

According to a first aspect, a method according to the invention is based on the idea of resolving a network address of a terminal, said terminal being assigned a SIP address, the method comprising the following steps: receiving an address resolving request relating to said terminal in a routing unit of a telecommunication network, the resolving unit comprising a priority list of address servers and/or databases, the priority list determining the order in which the resolving unit sends the address queries to one or more address servers and/or databases; sending address queries to one or more of said address servers and/or databases in the order determined by said priority list from said resolving unit; receiving, from each of said one or more address servers and/or databases, the network address of the terminal or an error message indicating the network address of the terminal was not found; and sending a response to the address resolving request from said resolving unit to the routing unit of the telecommunication network, the response including either the network address of the terminal or the error message.

According to an embodiment, the priority list comprises one or more of the following address servers and/or databases: a GRX/IPX DNS/ENUM database; a mobile number portability (MNP) database; an IR.21 database; a domain database of the telecommunication network; a public DNS/ENUM database.

According to an embodiment, the GRX/IPX DNS/ENUM database is placed first in the priority list.

According to an embodiment, the address resolving request is a SIP INVITE request.

According to an embodiment, the method comprises a further step of sending, prior to sending address queries to one or more address servers and/or databases according to the priority list, an address query to a federation database of the telecommunication network, the federation database including overall-level information of the Internet domain included in the address resolving request.

According to an embodiment, the telecommunication network is based on IMS architecture; and the routing unit is a S-CSCF.

The arrangement according to the invention provides significant advantages. The resolving unit enables a generic-purpose arrangement for resolving an address of a remote client terminal, regardless of what kind of access network the terminal is connected to. The arrangement is equally applicable to the services of mobile networks and fixed networks, as well as to purely Internet-based services.

From the operator viewpoint, a further advantage is the implementation of the resolving unit is not standard-related; i.e. the S-CSCF (or any other original requester) sends a standard ENUM/DNS query to the resolving unit and receives a standard ENUM/DNS reply, whereby the S-CSCF does not need to be aware of the operation of the resolving unit there between. Moreover, an advantage is that the operator may, at least to some extent, control the traffic and direct it to certain networks (e.g. due costs) by adjusting the priority list appropriately. The network operators do not need to wait for e.g. a global ENUM/DNS database to be implemented, but they can offer new IP-based services immediately.

This and other aspects of the invention and the embodiments related thereto will become apparent in view of the detailed disclosure of the embodiments further below.

### List of drawings

In the following, various embodiments of the invention will be described in more detail with reference to the appended drawings, in which
- Fig. 1: shows a simplified network structure, wherein the IMS network is implemented in connection with a 3GPP network
- Fig. 2: shows an example of network architecture suitable for implementing the arrangement according to the invention; and
- Fig. 3: shows a server according to an embodiment of the invention in a reduced block chart.

### Description of embodiments

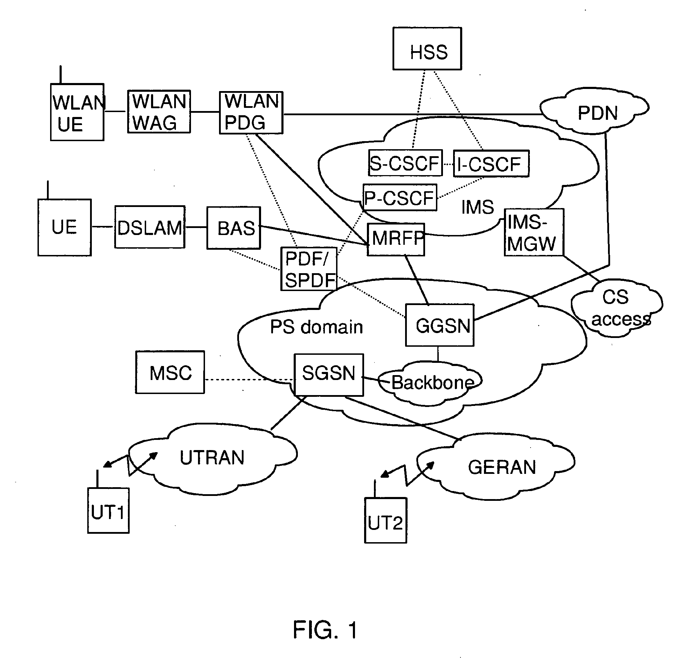

Fig. 1 shows a simplified network structure, wherein the IMS network is implemented in connection with a 3GPP network, and even though being strongly simplified, it is mentioned to illustrate the complexity of future telecommunication network and e.g. the difficulties in resolving the address of a mobile terminal as discussed above. A skilled man appreciates that in addition to the elements shown in Fig. 1, various implementations of the IMS network comprise a great number of other network elements as well, but the appreciation of the invention does not require that these elements should be disclosed herewith.

There has been a significant change of paradigm in the design of mobile networks from circuit-switched domain towards packet-switched domain. The reason for this is the aim to enable full IP-based communication, exploiting the benefits of IP for all types of traffic, and providing for seamless operation between different systems. Accordingly, the main network elements of the 3G network are the gateway nodes GGSN (Gateway GPRS Support Node) and serving nodes SGSN (Serving GPRS Support Node) located in a packet domain network (PS domain), such a 3G packet network or a GPRS packet network. Typically several serving nodes SGSN are connected to one gateway node GGSN via a backbone a network, which utilizes the IP protocol, preferably IPv6 and applies an encapsulation according to a gateway tunnelling protocol GTP to all 3G data. The serving node SGSN is in contact with user terminals UT1, UT2 through the radio access networks UTRAN and GERAN. A task of the serving node SGSN is to detect mobile stations capable of packet radio connections in its service area, to transmit and receive data packets from said mobile stations and to track the location of the mobile stations in its service area. Records related to packet radio services including subscriber-specific packet data protocol contents are also stored in the home subscriber server HSS.

The gateway node GGSN acts as a gateway between the mobile communication network and the external data network PDN (Packet Data Network). It is worth to notice that, in contrast to the traditional design, the role of the MSC (Mobile Switching Centre) has been reduced to a signalling-only element, while the circuit-switched traffic (CS access) is processed in and routed via a dedicated media gateway (IMS-MGW). A Multimedia Resource Function Processor (MRFP) is another gateway of the IMS system, which takes care of routing IP based traffic from different access networks.

The IP Multimedia Subsystem (IMS) comprises all the core network elements for the provision of multimedia services via any IP-based communication in principle. Using the Session Initiation Protocol (SIP), IMS enables mobile operators to offer their subscribers multimedia services based on and built upon Internet applications, services and protocols. The SIP servers or proxies of the IMS are collectively called CSCF (Call. Session Control Function), and there are different roles for SIP servers in processing SIP signalling packets.

A P-CSCF (Proxy-CSCF) is a SIP proxy that is the first point of contact for the IMS terminal. An IMS terminal is assigned to a particular P-CSCF upon registration for the whole duration of the registration. Thus, P-CSCF is located on the path of all signalling messages, and it can inspect every message. A P-CSCF is typically connected to the access networks through a PDF (Policy Decision Function), which authorizes media plane resources e.g. quality of service (QoS), implements policy control, bandwidth management, etc.

An I-CSCF (Interrogating-CSCF) is a SIP proxy, the IP address of which is published in the DNS of the domain, thus enabling remote servers (e.g., a S-CSCF in a foreign domain) to find it, and use it as an entry point for all SIP packets to this domain. The I-CSCF queries the HSS to retrieve the user location, and then route the SIP request to its assigned S-CSCF.

An S-CSCF (Serving-CSCF) is a SIP server operating as the central node of the signalling plane, and it performs session control as well. The S-CSCF downloads and uploads user profiles to and from the HSS and handles SIP registrations, which allows it to bind the user location (e.g. the IP address of the terminal) and the SIP address. Just like the P-CSCF, the S-CSCF is located on the path of all signalling messages, and it can inspect every message. It is also the function that provides routing services, using ENUM/DNS queries.

In Fig. 1 there are also shown two further access networks, i.e. a WLAN access network comprising a wireless access gateway (WAG) and a 3GPP I-WLAN Packet Data Gateway (WLAN PDG) for WLAN capable terminals (WLAN UE), and a xDSL access network though a DSLAM (Digital Subscriber Line Access Multiplexer) and a BAS (Broadband Access Server) for any terminal UE comprising an xDSL modem, e.g. a desktop/laptop PC. Their IP traffic is routed through the MRFP and signalling traffic through the PDF/SPDF.

Accordingly, it is evident that managing e.g. user location data and routing paging requests in such a versatile network environment is a challenging task. This is further underlined by the fact that there is no common database wherefrom the SIP addresses could be resolved nor a global ENUM DNS database. Thus, if a call session request is received in the IMS network, the S-CSCF, which is the network element responsible for resolving the address information of the requested client, primarily relies on the user profile data in the HSS. However, as mentioned above, the HSS contains address data from only a limited number of network domains, and there exist inevitably a great number of network domains, which are invisible to an HSS of a particular IMS network. If the S-CSCF cannot resolve the address information from the HSS, the S-CSCF typically sends an ENUM request to an operator-specific ENUM database, which may be commonly operated by a number of network operators, but again not all network domains are reached through this procedure either.

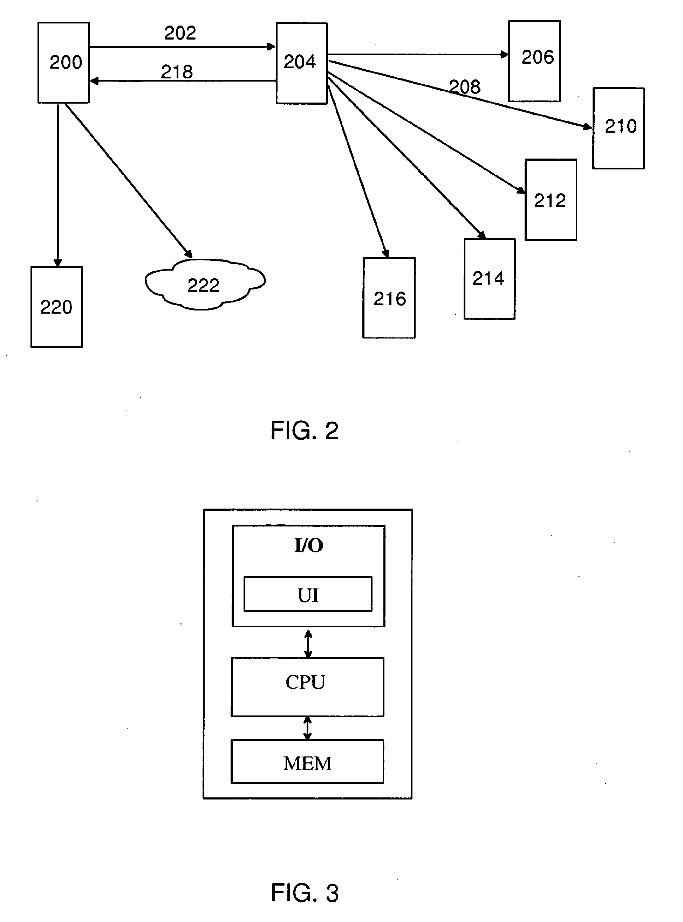

Fig. 2 depicts an example of network architecture suitable for implementing the arrangement according to the invention. A starting point of this example is that the IMS network receives a SIP invitation for a client to participate in a call session, i.e. a SIP INVITE request for a client having address john.doe@operator.net. Accordingly, the IMS network, more particularly the S-CSCF therein, must resolve the actual operator using the domain operator.net, the correct network element whereto the client is connected, and the network, which must be used in routing the invitation.

According to the invention, instead of the S-CSCF sending routing requests to various networks, there is implemented a supplementary logical unit for resolving the required address information. This supplementary unit, which is herein referred as "a resolver" or "a resolving unit", may be a separate network element or only a separate logical unit implemented in connection with another network element, e.g. with a S-CSCF. However, the resolver is dedicated to resolve the required address information: the S-CSCF sends a request to the resolver, the resolver carries out the address queries and then sends a response back to the S-CSCF. Provided that the address is found, the S-CSCF can then proceed by sending the invitation to the correct address according to the prior art methods.

Now the operation of the resolver is further illustrated by referring to the example of Fig. 2. The resolver 204 receives an address resolving request 202 from the IMS network element responsible for resolving the address information, e.g. from the S-CSCF 200. The resolver preferably includes a priority list of address servers and databases in the order of their significance, according to which the resolver starts to resolve the address. The priority list preferably includes all relevant address servers and databases, wherefrom the address most probably could be found. Furthermore, the priority list is preferably drafted such that the address server/database, wherefrom the address is found with the highest probability, is placed first in the list, aiming to minimize the number of queries and thus the costs of the network operator.

According to an embodiment, regardless of the priority list and its order of servers and databases, the first query can always be directed to a general DNS database comprising overall-level information about the "community" or "federation" using the domain operator.net. This way the actual operator could be resolved and a more specific query could be directed to an ENUM/DNS database corresponding to said operator in order to resolve more specific address information of the client.

However, if no hint of the domain is received through this "federation" database query, then a logical step to start the actual queries would be a GRX/IPX (GPRS Roaming eXchange/ Internetwork Packet eXhange) DNS/ENUM database 206, which is a private DNS/ENUM database, separated from the Internet, operated mutually by various GSM operators, which are connected together at peering points. The GRX networks works effectively as a private backbone for GSM operators. In such an ENUM database, it is mandatory for the operators participating in the database to store an E.164 address of each client, unlike in public ENUM practise, wherein the storing E.164 addresses is only obligatory. Accordingly, the GPX/IPX DNS/ENUM database would be the most probable place to find the address of a mobile client, and therefore it is logical to place it first in the priority list.

The actual query can be based on the sip-uri, like sip:john.doe@operator.net, whereby a standard DNS query is directed to the IPX DNS/ENUM database. The query can also be based on the tel-uri, like tel:+358-40-1234567, whereby the tel-uri used as an address in the session set-up must first be converted into ENUM address domain using a standard ENUM function, i.e. said tel-uri is converted to 7.6.5.4.3.2.1.0.4.8.5.3.e164enum.net.

In order to clarify both the ENUM and the DNS procedure, the ENUM-based procedure, which is known as such, is illustrated in following. As explained above, in the beginning the resolver 204 receives an address resolving request 202 from the S-CSCF 200. In other words, the originating S-CSCF 200 sends the DNS query 202 for 7.6.5.4.3.2.1.0.4.8.5.3.e164enum.net. to the resolver 204 requesting for the NAPTR RR (Naming Authority Pointer Resource Record). The resolver 204 sends the DNS query for 7.6.5.4.3.2.1.0.4.8.5.3.e164enum.net to a DNS root server requesting for the NAPTR RR, and the root server acknowledges the query with the NS (Name Server) and associated A RRs ("A" flag defining the next stage lookup to address information in particular, not to any other record types available in DNS systems) for e164enum.net, i.e. name server and address for a lower level (i.e. tier) of the hierarchical ENUM structure.

Accordingly, the ENUM query is carried out as a series of repeated queries, each further query being directed to a lower tier, i.e. a more specifically defined subdomain of the DNS name space, until the actual NAPTR RR for the client is found. Thus, the resolver sends the DNS query for 7.6.5.4.3.2.1.0.4.8.5.3.e164enum.net to ENUM Tier 0/1 server requesting for the NAPTR RR, whereby the ENUM Tier 0/1 server returns the NS RRs of ENUM Tier 2 servers for 7.6.5.4.3.2.1.0.4.8.5.3.e164enum.net to the resolver. Then the resolver chooses the NS RR with a host name, such as enums1.abc.gprs, and sends the DNS query for enum1.abc.gprs to the root server requesting for the A RR. The root server returns the NS and associated A RRs for abc.gprs to the resolver.

Then the resolver again selects the NS RR with a host name, such as dns1.abc.gprs, and sends the DNS query for enum1.abc.gprs to the DNS server requesting for the A RR, whereby the DNS server returns the A RR to the resolver. Finally, the resolver sends the DNS query for 7.6.5.4.3.2.1.0.4.8.5.3.e164enum.net to ENUM Tier 2 server requesting for the NAPTR RR, the ENUM Tier 2 Server returns the NAPTR RRs to the resolver, which then returns the NAPTR RRs to S-CSCF. For a more detailed disclosure of ENUM procedures, a reference is made to the IETF document RFC2916.

After the S-CSCF has received NAPTR RRs, session will be set up in a normal way. Originating IMS locates SIP servers based on received NAPTR RRs using DNS and sends SIP INVITE towards Terminating IMS via IPX Proxy-O & IPX Proxy-T and user plane connection will be established.

However, mobile number portability, i.e. the possibility for the user to keep his/her MSISDN number when changing his/her operator subscription to another operator, may cause confusion in the above procedure, if the query is based the MSISDN number. Thus, if the address of the client could not be resolved from the GPX/IPX, a next logical place to direct the query would be a MNP DB (Mobile Number Portability Database), which includes information from several operators relating to the MSISDN numbers transferred to another operator.

In this case, the query is carried out in similar manner as in a standard circuit-switched GSM call or a text message (SMS). Accordingly, the resolver 204 sends a standard MAP request 208 including the MSISDN number of the client to the home location register HLR, which makes a query to its own MNP DB 210 to check whether the number is transferred to another operator. If the MSISDN number is found in the MNP DB, then the HLR responds to the query and sends the current number of the client to the resolver 204, the number indicating the actual operator whereto send then session set-up request.

The implementation of the MNP DB query can be carried out in various ways, depending on how the number portability between the operators is accomplished in each country. For example, in some cases the query can be sent directly from resolver 204 to the MNP DB including the number portability data in XML form, whereby it is not necessary to route the queries through the HLR. However, in any case the result is the same: either an indication of the actual operator of the client or an error message is received.

If no address information of the client is found in the MNP DB, then a next step could be a query to the IR.21 database 212. The IR.21 database is operated by GSMA (GSM Association, a global trade association for mobile operators), which includes information and IP addresses about network elements used in inter-operator connections. The information is typically used in handling roaming and interworking situations. Accordingly, in order to resolve the location of a client of a particular network operator, the resolver 204 may, for example, request an IP address of a MMSC (Multimedia Messaging Service Center) for the client in said network. If received, the resolver can the use the IP address as an address for a SIP INVITE message.

If still no address information of the client is found, then the requesting network operator may check its internal domain database 214, which may include information about all the domains that the interworking partners of the operator are currently using. As a simplified example, such domain database may include the following piece of information: operator1.nz: 222.111.123.123. Now, if it is known that the client whose address is searched for is a client of Operator1 in New Zealand, the operator is corresponded by a server or another peer having an IP address 222.111.123.123.

If the address information of the client is still not resolved, a query can be made to a public DNS/ENUM database 216. The procedure resembles very much that of the case with the GPX/IPX DNS/ENUM database described above.

It is extremely likely that the address information of the client is resolved from one of the above databases, and the resolver 204 returns the address to the S-CSCF 200 with a message 218. If, however, none of the above queries gives a resolved address of the client, then the resolver 204 acknowledges the address resolving request 202 to the S-CSCF 200 with a "not found" error message 218.

According to an embodiment, the S-CSCF has then primarily two options to proceed with the search. A first option is to send the SIP INVITE request to an IPX Proxy 220 located in the above-described IPX network. Such an IPX Proxy may comprise an internal database, managed by the IPX proxy operator, which may store some proprietary information relating to client terminals and their location. The IPX proxy operator may, for example, offer a value-added service relating to client terminal information, which may include such information, which is not available anywhere else. If such an internal database exists, then a similar query as described above is carried out; in this case, the IPX proxy operates as the resolver and sends a query to the internal database.

A second option is to carry out so-called PSTN breakout, i.e. a standard MAP request to the HLR, which tries to resolve the counterpart through basic PSTN 222 queries. If the client is found, then a conventional circuit-switched call can be established. Even though this option does not utilize the IP properties of the IMS system, it may still provide a further possibility to locate the desired client. A skilled man appreciates that depending on the network structure and the available address database, there may still exist more options, in addition to the above-mentioned ones, to carry out a further search.

A skilled man appreciates that any of the embodiments described above may be implemented as a combination with one or more of the other embodiments, unless there is explicitly or implicitly stated that certain embodiments are only alternatives to each other. Particularly, the order of the priority list, i.e. the address servers and databases, wherefrom the address of the client is searched for, may vary depending on the operator and the network structure. Thus, a priority list may include only a subgroup of the address servers and databases described above in a different order. Furthermore, it is worth to notice that even though the above examples are IMS-related, the embodiments are not limited to IMS network solely, but they can be implemented e.g. in connection with a plain SIP server.

The invention and its embodiments provide significant advantages. The resolver described above enables a generic-purpose arrangement for resolving an address of a remote client terminal, regardless of what kind of access network the terminal is connected to. The arrangement is equally applicable to the services of mobile networks and fixed networks, as well as to purely Internet-based services. The network operators do not need to wait for e.g. a global ENUM/DNS database to be implemented, but they can offer new IP-based services immediately.

From the operator viewpoint, a further advantage is the implementation of the resolver is not standard-related; i.e. the S-CSCF (or any other original requester) sends a standard ENUM/DNS query to the resolver and receives a standard ENUM/DNS reply, whereby the S-CSCF does not need to be aware of the operation of the resolver there between. Moreover, an advantage is that the operator may, at least to some extent, control the traffic and direct it to certain networks (e.g. due costs) by adjusting the priority list appropriately.

The actual resolver may preferably be a separate server connected to the S-CSCF. Accordingly, the server comprises, as illustrated in Fig. 3, memory MEM, a user interface UI, I/O means I/O for arranging data transmission with other devices, and one or more central processing units CPU comprising at least one processor. The memory MEM includes a non-volatile portion for storing the applications controlling the central processing unit CPU and other data to be stored and a volatile portion to be used for temporary data processing. Alternatively, the functionalities of the resolver may be implemented as a part of the S-CSCF.

In either case, the functionalities of the invention are preferably implemented in the server as a computer program which, when executed in a central processing unit CPU, affects the server to implement procedures of the invention. Functions of the computer program SW may be distributed to several separate program components communicating with one another. The computer software may be stored into any memory means, such as the hard disk of a PC or a CD-ROM disc, from where it can be loaded into the memory of server. The computer software can also be loaded through a network, for instance using a TCP/IP protocol stack.

It is obvious that the present invention is not limited solely to the above-presented embodiments, but it can be modified within the scope of the appended claims.

## Claims

1. A method for resolving a network address of a terminal, said terminal being assigned a SIP address, the method comprising:
receiving an address resolving request relating to said terminal in a routing unit (200) of a telecommunication network, said address resolving request being associated to the SIP address; **characterized by**
forwarding (202) the address resolving request to a resolving unit (204), the resolving unit (204) comprising a priority list of address servers and/or databases, the priority list determining the order in which the resolving unit sends the address queries (208) to one or more address servers and/or databases;
sending address queries (208) to one or more of said address servers and/or databases (206, 210, 212, 214, 216) in the order determined by said priority list from said resolving unit;
receiving, from each of said one or more address servers and/or databases (206, 210, 212, 214, 216), the network address of the terminal or an error message indicating the network address of the terminal was not found; and
sending a response (218) to the address resolving request from said resolving unit (204) to the routing unit (200) of the telecommunication network, the response including either the network address of the terminal or the error message.

2. The method according to claim 1, **characterized by**
the priority list comprising one or more of the following address servers and/or databases:
- a GRX/IPX DNS/ENUM database (206);
- a mobile number portability (MNP) database (210);
- an IR.21 database (212);
- a domain database of the telecommunication network (214);
- a public DNS/ENUM database (216).

3. The method according to claim 2, **characterized in that**
the GRX/IPX DNS/ENUM database is placed first in the priority list.

4. The method according to any preceding claim, **characterized in that**
the address resolving request is a SIP INVITE request.

5. The method according to any preceding claim, **characterized by**
sending, prior to sending address queries to one or more address servers and/or databases according to the priority list, an address query to a federation database of the telecommunication network, the federation database including overall-level information of the Internet domain included in the address resolving request.

6. The method according to any preceding claim, **characterized by**
in response to no network address of the terminal could be solved through the address queries to said one or more address servers and/or databases,
sending the address query to an IPX proxy (220) located in an IPX network.

7. The method according to any preceding claim, **characterized by**
in response to no network address of the terminal could be solved through the address queries to said one or more address servers and/or databases,
sending a standard MAP request to a PSTN network (222).

8. The method according to any preceding claim, **characterized in that**
the telecommunication network is based on IMS architecture; and
the routing unit is a S-CSCF.

9. A server (204) for resolving a network address of a terminal, said terminal being assigned a SIP address, **characterized in that**
the server includes a resolving unit (204) comprising a priority list of address servers and/or databases, the priority list determining the order in which the resolving unit sends the address queries to one or more address servers and/or databases; the server being arranged to
receive an address resolving request (202) relating to said terminal from a routing unit (200) of a telecommunication network, said address resolving request being associated to the SIP address;
send address queries (208) to one or more of said address servers and/or databases (206, 210, 212, 214, 216) in the order determined by said priority list;
receive, from each of said one or more address servers and/or databases (206, 210, 212, 214, 216), the network address of the terminal or an error message indicating the network address of the terminal was not found; and
send a response (218) to the address resolving request to the routing unit (200) of the telecommunication network, the response including either the network address of the terminal or the error message.

10. The server according to claim 9, **characterized in that**
the priority list comprises one or more of the following address servers and/or databases:
- a GRX/IPX DNS/ENUM database (206);
- a mobile number portability (MNP) database (210);
- an IR.21 database (212);
- a domain database of the telecommunication network (214);
- a public DNS/ENUM database (216).

11. The server according to claim 10, **characterized in that**
the GRX/IPX DNS/ENUM database is placed first in the priority list.

12. The server according to any of the claims 9 - 11, **characterized in that**
the address resolving request is a SIP INVITE request.

13. The server according to any of the claims 9 - 12, **characterized in that** the server is arranged to
send, prior to sending address queries to one or more address servers and/or databases according to the priority list, an address query to a federation database of the telecommunication network, the federation database including overall-level information of the Internet domain included in the address resolving request.

14. The server according to any of the claims 9 - 13, **characterized in that**
the server is functionally connected to a S-CSCF of a telecommunication network based on IMS architecture.

15. A computer program product, stored on a computer readable medium and executable in a data processing device, for resolving a network address of a terminal, said terminal being assigned a SIP address, **characterized in that** the computer program product comprises:
a computer program code section for defining a priority list of address servers and/or databases, the priority list determining the order in which the resolving unit sends the address queries to one or more address servers and/or databases;
a computer program code section for receiving an address resolving request relating to said terminal from a routing unit of a telecommunication network, said address resolving request being associated to the SIP address;
a computer program code section for sending address queries to one or more of said address servers and/or databases in the order determined by said priority list;
a computer program code section for receiving, from each of said one or more address servers and/or databases, the network address of the terminal or an error message indicating the network address of the terminal was not found; and
a computer program code section for sending a response to the address resolving request to the routing unit of the telecommunication network, the response including either the network address of the terminal or the error message.

## Patentansprüche

1. Verfahren zum Klären einer Netzwerkadresse eines Endgeräts, wobei dem Endgerät eine SIP-Adresse zugeordnet wird und wobei das Verfahren umfasst:
Empfangen einer Anforderung zur Adressklärung bezüglich des Endgeräts in einer Vermittlungseinheit (200) eines Telekommunikationsnetzwerks, wobei die Anforderung zur Adressklärung mit der SIP-Adresse assoziiert wird;
**gekennzeichnet durch**
Weiterleiten (202) der Anforderung zur Adressklärung an eine Klärungseinheit (204), wobei die Klärungseinheit (204) eine Prioritätsliste von Adress-Servern und/oder -Datenbanken aufweist, und die Prioritätsliste die Reihenfolge festlegt, in der die Klärungseinheit die Adressanfragen (208) an einen oder mehrere Adress-Server und/oder -Datenbanken sendet;
Senden von Adressanfragen (208) von der Klärungseinheit an einen oder mehrere der Adress-Server und/oder Datenbanken (206, 210, 212, 214, 216) in der **durch** die Prioritätsliste festgelegten Reihenfolge;
Empfangen der Netzwerkadresse des Endgeräts oder einer Fehlerbotschaft, die anzeigt, dass die Netzwerkadresse des Endgeräts nicht gefunden wurde, von jedem der genannten einen oder mehreren Adress-Server und/oder -Datenbanken (206, 210, 212, 214, 216); und
Senden einer Antwort (218) auf die Anforderung zur Adressklärung von der Klärungseinheit (204) an die Vermittlungseinheit (200) des Telekommunikationsnetzwerks, wobei die Antwort entweder die Netzwerkadresse des Endgeräts oder die Fehlerbotschaft beinhaltet.

2. Verfahren nach Anspruch 1, **dadurch gekennzeichnet, dass** die Prioritätsliste einen oder mehrere der folgenden Adress-Server und/oder - Datenbanken aufweist:
- eine GRX/IPX DNS/ENUM-Datenbank (206);
- eine Rufnummermitnahme (MNP)-Datenbank (210);
- eine IR.21-Datenbank (212);
- eine Domain-Datenbank des Telekommunikationsnetzwerks (214);
- eine öffentliche DNS/ENUM-Datenbank (216).

3. Verfahren nach Anspruch 2, **dadurch gekennzeichnet, dass** die GRX/IPX DNS/ENUM-Datenbank an erster Stelle der Prioritätsliste platziert ist.

4. Verfahren nach irgendeinem vorhergehenden Anspruch, **dadurch gekennzeichnet, dass** die Anforderung zur Adressklärung eine SIP INVITE-Anforderung ist.

5. Verfahren nach irgendeinem vorhergehenden Anspruch, **gekennzeichnet durch**
Senden, vor dem Senden der Adressanfragen an einen oder mehrere Adress-Server und/oder -Datenbanken gemäß der Prioritätsliste, einer Adressanfrage an eine Verbunddatenbank des Telekommunikationsnetzwerks, wobei die Verbunddatenbank Ebenen-übergreifende Informationen der Internetdomain enthält, die in der Anforderung zur Adressklärung enthalten ist.

6. Verfahren nach irgendeinem vorhergehenden Anspruch, **gekennzeichnet durch**
als Reaktion, wenn die Netzwerkadresse des Endgeräts **durch** die Adressanfragen an einen oder mehrere Adress-Server und/oder - Datenbanken nicht geklärt werden kann, Senden einer Adressanfrage an einen IPX Proxy (220), der in einem IPX-Netzwerk angeordnet ist.

7. Verfahren nach irgendeinem vorhergehenden Anspruch, **gekennzeichnet durch**
als Reaktion, wenn die Netzwerkadresse des Endgeräts **durch** die Adressanfragen an einen oder mehrere Adress-Server und/oder - Datenbanken nicht geklärt werden kann, Senden einer Standard-MAP-Anforderung an ein PSTN-Netzwerk (222).

8. Verfahren nach irgendeinem vorhergehenden Anspruch, **dadurch gekennzeichnet, dass** das Telekommunikationsnetzwerk auf einer IMS-Architektur basiert; und die Vermittlungseinheit ist eine S-CSCF.

9. Server (204) zum Klären einer Netzwerkadresse eines Endgeräts, wobei dem Endgerät eine SIP-Adresse zugeordnet wird, **dadurch gekennzeichnet, dass**
der Server enthält eine Klärungseinheit (204), die eine Prioritätsliste von Adress-Servern und/oder -Datenbanken aufweist, wobei die Prioritätsliste die Reihenfolge festlegt, in der die Klärungseinheit die Adressanfragen an einen oder mehrere Adress-Server und/oder -Datenbanken sendet; der Server ist eingerichtet zum
Empfangen einer Anforderung zur Adressklärung (202) bezüglich des Endgeräts von einer Vermittlungseinheit (200) eines Telekommunikationsnetzwerks, wobei die Anforderung zur Adressklärung mit der SIP-Adresse assoziiert wird;
Senden von Adressanfragen (208) an einen oder mehrere der Adress-Server und/oder -Datenbanken (206, 210, 212, 214, 216) in der durch die Prioritätsliste festgelegten Reihenfolge;
Empfangen der Netzwerkadresse des Endgeräts oder einer Fehlerbotschaft, die anzeigt, dass die Netzwerkadresse des Endgeräts nicht gefunden wurde, von jedem der genannten einen oder mehreren Adress-Server und/oder -Datenbanken (206, 210, 212, 214, 216); und
Senden einer Antwort (218) auf die Anforderung zur Adressklärung an die Vermittlungseinheit (200) des Telekommunikationsnetzwerks, wobei die Antwort entweder die Netzwerkadresse des Endgeräts oder die Fehlerbotschaft beinhaltet.

10. Server nach Anspruch 9, **dadurch gekennzeichnet, dass** die Prioritätsliste einen oder mehrere der folgenden Adress-Server und/oder Datenbanken aufweist:
- eine GRX/IPX DNS/ENUM-Datenbank (206);
- eine Rufnummermitnahme (MNP)-Datenbank (210);
- eine IR.21-Datenbank (212);
- eine Domain-Datenbank des Telekommunikationsnetzwerks (214);
- eine öffentliche DNS/ENUM-Datenbank (216).

11. Server nach Anspruch 10, **dadurch gekennzeichnet, dass** die GRX/IPX DNS/ENUM-Datenbank an erster Stelle der Prioritätsliste platziert ist.

12. Server nach irgendeinem der Ansprüche 9 bis 11, **dadurch gekennzeichnet, dass** die Anforderung zur Adressklärung eine SIP INVITE-Anforderung ist.

13. Server nach irgendeinem der Ansprüche 9 bis 12, **dadurch gekennzeichnet, dass** der Server eingerichtet ist zum
Senden, vor dem Senden der Adressanfragen an einen oder mehrere Adress-Server und/oder -Datenbanken gemäß der Prioritätsliste, einer Adressanfrage an eine Verbunddatenbank des Telekommunikationsnetzwerks, wobei die Verbunddatenbank Ebenen-übergreifende Informationen der Internetdomain enthält, die in der Anforderung zur Adressklärung enthalten ist.

14. Server nach irgendeinem der Ansprüche 9 bis 13, **dadurch gekennzeichnet, dass** der Server funktional mit einem S-CSCF eines auf der IMS-Architektur basierenden Telekommunikationsnetzwerks verbunden ist.

15. Computerprogrammprodukt, das auf einem Computer-lesbaren Medium gespeichert ist und in einem Datenverarbeitungsgerät ausführbar ist, zum Klären einer Netzwerkadresse eines Endgeräts, wobei dem Endgerät eine SIP-Adresse zugeordnet wird, **dadurch gekennzeichnet, dass** das Computerprogrammprodukt aufweist:
einen Computerprogrammcodeabschnitt zum Definieren einer Prioritätsliste von Adress-Servern und/oder -Datenbanken, wobei die Prioritätsliste die Reihenfolge festlegt, in der die Klärungseinheit Adressanfragen an einen oder mehrere Adress-Server und/oder -Datenbanken sendet;
einen Computerprogrammcodeabschnitt zum Empfangen einer Anforderung zur Adressklärung bezüglich des Endgeräts von einer Vermittlungseinheit eines Telekommunikationsnetzwerkes, wobei die Anforderung zur Adressklärung mit der SIP-Adresse assoziiert wird;
einen Computerprogrammcodeabschnitt zum Senden von Adressanfragen an einen oder mehrere der Adress-Server und/oder -Datenbanken in der durch die Prioritätsliste festgelegten Reihenfolge;
einen Computerprogrammcodeabschnitt zum Empfangen der Netzwerkadresse des Endgeräts oder einer Fehlerbotschaft, die anzeigt, dass die Netzwerkadresse des Endgeräts nicht gefunden wurde, von jedem der genannten einen oder mehreren Adress-Server und/oder -Datenbanken; und
einen Computerprogrammcodeabschnitt zum Senden einer Antwort auf die Anforderung zur Adressklärung an die Vermittlungseinheit des Telekommunikationsnetzwerks, wobei die Antwort entweder die Netzwerkadresse des Endgeräts oder die Fehlerbotschaft beinhaltet.

## Revendications

1. Procédé de résolution d'une adresse de réseau d'un terminal, une adresse de protocole d'établissement de session (SIP pour "Session Initiation Protocol") étant affectée audit terminal, le procédé comprenant :
la réception d'une demande de résolution d'adresse se rapportant audit terminal dans une unité (200) de routage d'un réseau de télécommunications, ladite demande de résolution d'adresse étant associée à l'adresse de SIP ;
**caractérisé :**
**par** le renvoi (202) de la demande de résolution d'adresse à une unité (204) de résolution, l'unité (204) de résolution comprenant une liste de priorité de serveurs et/ou de bases de données d'adresses, la liste de priorité déterminant l'ordre dans lequel l'unité de résolution envoie les interrogations (208) d'adresse à un ou plusieurs serveurs et/ou bases de données d'adresses ;
par l'envoi, par ladite unité de résolution, d'interrogations (208) d'adresse à un ou plusieurs desdits serveurs et/ou bases de données (206, 210, 212, 214, 216) d'adresses dans l'ordre déterminé par ladite liste de priorité ;
par la réception, en provenance de chacun desdits un ou plusieurs serveurs et/ou bases de données (206, 210, 212, 214, 216) d'adresses, de l'adresse de réseau du terminal ou d'un message d'erreur indiquant que l'adresse de réseau du terminal n'a pas été trouvée ; et
par l'envoi, par ladite unité (204) de résolution à l'unité (200) de routage du réseau de télécommunications, d'une réponse (218) à la demande de résolution d'adresse, la réponse incluant soit l'adresse de réseau du terminal soit le message d'erreur.

2. Procédé selon la revendication 1, **caractérisé en ce que** la liste de priorité comprend un ou plusieurs des serveurs et/ou bases de données d'adresses suivants :
- une base de données (206) de noms de domaine/numérotation électronique et transposition de numéros selon la norme E.164 (DNS/ENUM pour "Domain Name System/Electronic Numbering and E.164 Number Mapping") de noeud d'itinérance du GPRS/noeud d'échange de paquets par réseau (GRX/IPX pour "GPRS Roaming eXchange/Internetwork Packet eXchange") ;
- une base de données (210) de portabilité de numéros de mobile (MNP pour "Mobile Number Portability") ;
- une base de données (212) selon la norme IR.21 ;
- une base de données de domaines du réseau (214) de télécommunications ;
- une base de données publique (216) de DNS/ENUM.

3. Procédé selon la revendication 2, **caractérisé en ce que** la base de données de DNS/ENUM de GRX/IPX est placée en premier dans la liste de priorité.

4. Procédé selon l'une quelconque des revendications précédentes, **caractérisé en ce que** la demande de résolution d'adresse est une demande d'invitation de SIP (SIP INVITE).

5. Procédé selon l'une quelconque des revendications précédentes, **caractérisé par** l'envoi, avant d'envoyer des interrogations d'adresse à un ou plusieurs serveurs et/ou bases de données d'adresses selon la liste de priorité, d'une interrogation d'adresse à une base de données de fédération du réseau de télécommunications, la base de données de fédération incluant une information de niveau global du domaine Internet inclut dans la demande de résolution d'adresse.

6. Procédé selon l'une quelconque des revendications précédentes, **caractérisé** :
en réponse à ce qu'aucune adresse de réseau du terminal ne peut être résolue par les interrogations d'adresse adressées auxdits un ou plusieurs serveurs et/ou bases de données d'adresses,
par l'envoi d'une interrogation d'adresse à un mandataire (220) d'IPX situé dans un réseau d'IPX.

7. Procédé selon l'une quelconque des revendications précédentes, **caractérisé** :
en réponse à ce qu'aucune adresse de réseau du terminal ne peut être résolue par les interrogations d'adresse adressées auxdits un ou plusieurs serveurs et/ou bases de données d'adresses,
par l'envoi d'une demande standard de transposition (MAP) à un réseau téléphonique public commuté (PSTN pour "Public Switched Téléphone Network") (222).

8. Procédé selon l'une quelconque des revendications précédentes, **caractérisé :**
**en ce que** le réseau de télécommunications est basé sur une architecture de sous-systèmes de multimédia sous protocole d'Internet (IMS pour "IP Multimedia Subsystem") ; et
**en ce que** l'unité de routage est un serveur ayant une fonction de commande d'appel/session (S-CSCF pour "Serving Call Session Function").

9. Serveur (204) destiné à résoudre une adresse de réseau d'un terminal, une adresse de SIP étant affectée audit terminal, **caractérisé :**
**en ce que** le serveur inclut une unité (204) de résolution comprenant une liste de priorité de serveurs et/ou de bases de données d'adresses, la liste de priorité déterminant l'ordre dans lequel l'unité de résolution envoie les interrogations d'adresse à un ou plusieurs serveurs et/ou bases de données d'adresses, le serveur étant agencé :
pour recevoir d'une unité (200) de routage d'un réseau de télécommunications une demande (202) de résolution d'adresse se rapportant audit terminal, ladite demande de résolution d'adresse étant associée à l'adresse de SIP ;
pour envoyer des interrogations (208) d'adresse à un ou plusieurs desdits serveurs et/ou bases de données (206, 210, 212, 214, 216) d'adresses dans l'ordre déterminé par ladite liste de priorité ;
pour recevoir, en provenance de chacun desdits un ou plusieurs serveurs et/ou bases de données (206, 210, 212, 214, 216) d'adresses, l'adresse de réseau du terminal ou un message d'erreur indiquant que l'adresse de réseau du terminal n'a pas été trouvée ; et
pour envoyer, à l'unité (200) de routage du réseau de télécommunications, une réponse (218) à la demande de résolution d'adresse, la réponse incluant soit l'adresse de réseau du terminal soit le message d'erreur.

10. Serveur selon la revendication 9, **caractérisé en ce que** la liste de priorité comprend un ou plusieurs des serveurs et/ou bases de données d'adresses suivants :
- une base de données (206) de DNS/ENUM de GRX/IPX ;
- une base de données (210) de portabilité de numéros de mobile (MNP) ;
- une base de données (212) selon la norme IR.21 ;
- une base de données de domaines du réseau (214) de télécommunications ;
- une base de données publique (216) de DNS/ENUM.

11. Serveur selon la revendication 10, **caractérisé en ce que** la base de données de DNS/ENUM de GRX/IPX est placée en premier dans la liste de priorité.

12. Serveur selon l'une quelconque des revendications 9 à 11, **caractérisé en ce que** la demande de résolution d'adresse est une demande d'invitation de SIP (SIP INVITE).

13. Serveur selon l'une quelconque des revendications 9 à 12, **caractérisé en ce que** le serveur est agencé :
pour, avant d'envoyer des interrogations d'adresse à un ou plusieurs serveurs et/ou bases de données d'adresses selon la liste de priorité, envoyer une interrogation d'adresse à une base de données de fédération du réseau de télécommunications, la base de données de fédération incluant une information de niveau global du domaine Internet inclut dans la demande de résolution d'adresse.

14. Serveur selon l'une quelconque des revendications 9 à 13, **caractérisé en ce que** le serveur est connecté fonctionnellement à un S-CSCF d'un réseau de télécommunications basé sur une architecture d'IMS.

15. Produit programme d'ordinateur, mémorisé sur un support lisible par ordinateur et exécutable dans un dispositif de traitement de données, pour résoudre une adresse de réseau d'un terminal, une adresse de SIP étant affectée audit terminal, **caractérisé en ce que** le produit programme d'ordinateur comprend :
une section de code de programme d'ordinateur destinée à définir une liste de priorité de serveurs et/ou bases de données d'adresses, la liste de priorité déterminant l'ordre dans lequel l'unité de résolution envoie les interrogations d'adresse à un ou plusieurs serveurs et/ou bases de données d'adresses ;
une section de code de programme d'ordinateur destinée à recevoir, d'une unité de routage d'un réseau de télécommunications, une demande de résolution d'adresse se rapportant audit terminal, ladite demande de résolution d'adresse étant associée à l'adresse de SIP ;
une section de code de programme d'ordinateur destinée à envoyer des interrogations d'adresse à un ou plusieurs desdits serveurs et/ou bases de données d'adresses dans l'ordre déterminé par ladite liste de priorité ;
une section de code de programme d'ordinateur destinée à recevoir, de chacun desdits un ou plusieurs serveurs et/ou bases de données d'adresses, l'adresse de réseau du terminal ou un message d'erreur indiquant que l'adresse de réseau du terminal n'a pas été trouvée ; et
une section de code de programme d'ordinateur destinée à envoyer, à l'unité de routage du réseau de télécommunications, une réponse à la demande de résolution d'adresse, la réponse incluant soit l'adresse de réseau du terminal soit le message d'erreur.
